# EUROPEAN PATENT APPLICATION

(11) **EP 3 967 125 A1**
(43) Date of publication of application: **16.03.2022**
(21) Application number: 19928695.6
(22) Date of filing: 10.05.2019
(51) Int. Cl.: A01D 34/78, A01D 34/68

(54) **POWER-ASSISTED WORK MACHINE WITH CUTTING BLADE**

(71) Applicant: KAAZ Corporation, Okayama 704-8588 (JP)
(72) Inventor: NONAKA, Masaki, Okayama-shi, Okayama 704-8588 (JP); HIRAMATSU, Shinya, Okayama-shi, Okayama 704-8588 (JP); OGAWA, Koichi, Okayama-shi, Okayama 704-8588 (JP)
(74) Representative: De Arpe Tejero, Manuel
(86) International application number: PCT/JP2019/018821
(87) International publication number: WO 2020/230212

(57) **Abstract**

The present disclosure includes: a cutting blade; an electric motor (5) that rotationally drives the cutting blade; a main power source (6) that supplies electric power to the electric motor (5); a clutch that engages and disengages motive power between the electric motor (5) and the cutting blade; an inclination sensor (31) that detects an inclination of the machine body; and a controller (30) for controlling power on and off of the main power source (6). When a direction orthogonal to a travelling direction of the machine body is defined as the horizontal direction, and a center line in a vertical direction of the machine body when the machine body on a horizontal plane is viewed from a front side is defined as a reference line, the controller (30) turns off the main power source when the reference line is inclined at a prescribed angle or more with respect to the horizontal direction or when rotation of the electric motor (5) is stopped for a prescribed time period or more.

## Description

### TECHNICAL FIELD

The present disclosure relates to control for safety measures when removing grass in the vicinity of a cutting blade in an electric work machine with cutting blade in which a clutch is interposed between an electric motor and the cutting blade.

### BACKGROUND

Conventionally, work machines such as lawn mowers and grass cutters are used for mowing lawn and grass. Among these work machines, machines are known which include a cutting blade arranged in the horizontal direction, in which the cutting blade is rotated by a driving source, with an engine or an electric motor being used as the driving source of the cutting blade. For example, in a walk-behind grass cutter disclosed in Patent Literature 1, an electric motor 8 is used as the driving source of front and rear wheels and a cutting blade that rotates around the axial center thereof in the vertical direction.

The point that a clutch is interposed between the driving source of the cutting blade and the cutting blade is the same regardless of whether the driving source is an engine or an electric motor, and in the walk-behind grass cutter disclosed in Patent Literature 1, when a cutting blade clutch 54 is engaged during mowing, rotation of an output shaft 47 of the electric motor 8 is transmitted to a cutting blade 6 via the cutting blade clutch 54, and the cutting blade 6 is rotationally driven (see Fig. 1 of Patent Literature 1).

In a work machine equipped with a clutch, it is necessary to operate a clutch lever to place the clutch lever in an "on" state and engage the clutch. The positional relationship between the clutch lever and the cutting blade is usually a positional relationship such that mown grass cannot be removed while the clutch lever is held in the "on" state. According to such a positional relationship, at a time point at which the work machine is placed on its side to remove mown grass that has become clogged or entangled, rotation of the cutting blade is stopped even if the engine or motor is running.

### Citation List

### Patent Literature

Patent Literature 1: Japanese Patent Application Laid-open No. 2014-239660

### SUMMARY

However, when taking unforeseen situations into consideration, it is necessary to further strengthen the safety measures. For example, in a case where the driving source is an engine, the engine will stall if the cutting blade stops rotating due to the resistance of mown grass that has become clogged or entangled, and once the engine stalls, it is necessary to restart the engine to resume operation. On the other hand, in a case where the driving source is an electric motor, even if the cutting blade does not rotate, rotation of the electric motor resumes if the clutch is disengaged, and the rotation of the electric motor will continue as long as the clutch is disengaged.

In consideration of the safety aspects of conventional electric work machines with a cutting blade as described above, an object of the present disclosure is, with respect to an electric work machine with cutting blade that adopts a structure in which a clutch is interposed between an electric motor as the driving source of a cutting blade and the cutting blade, to provide an electric work machine with cutting blade in which safety measures are further strengthened.

To achieve the above object, an electric work machine with cutting blade of the present disclosure is an electric work machine with cutting blade that performs mowing work while causing a machine body to travel, including: a cutting blade; an electric motor that rotationally drives the cutting blade; a main power source that supplies electric power to the electric motor; a clutch that engages and disengages motive power between the electric motor and the cutting blade; an inclination sensor that detects an inclination of the machine body; and a controller for controlling power on and off of the main power source, wherein, when a direction orthogonal to a travelling direction of the machine body is defined as a horizontal direction, and a center line in a vertical direction of the machine body when the machine body on a horizontal plane is viewed from a front side is defined as a reference line, the controller turns off the main power source when the reference line is inclined at a prescribed angle or more with respect to the horizontal direction or when rotation of the electric motor is stopped for a prescribed time period or more.

According to the electric work machine with cutting blade of the present disclosure, taking into consideration circumstances which are assumed in the case of performing an operation to remove mown grass in the vicinity of a cutting blade, control is adopted so that the main power source automatically turns off when either one of two conditions is satisfied, namely, a condition that a reference line inclined by a prescribed angle or more and a condition that rotation of the electric motor stopped for a prescribed time period or more, and if the main power source is turned off, a multi-step operation is required in order to cause the cutting blade to rotate once again, and thus an unforeseen situation in which the cutting blade rotates unexpectedly does not occur, and the operator can carry out the removal of mown grass in the vicinity of the cutting blade without any safety problem, and a psychological burden of the operator is also eliminated.

In the electric work machine with cutting blade of the present disclosure, it is preferable that, by means of operation means for operating the clutch, it is possible to switch between a state in which the clutch is disengaged in which motive power of the electric motor is not transmitted to the cutting blade and a state in which the clutch is engaged and motive power of the electric motor is transmitted to the cutting blade, and a positional relationship between the operation means and the cutting blade is a positional relationship such that while an operator maintains a state in which the clutch is engaged by means of the operation means, the same operator as the operator cannot remove mown grass that is in a vicinity of the cutting blade. According to this configuration, when an operator carries out an operation to remove mown grass in the vicinity of the cutting blade, the clutch enters a disengaged state and rotation of the cutting blade stops, and hence this configuration is more advantageous in terms of safety measures.

The advantageous effects of the present disclosure are as described above and may be summarized by saying that, according to the present disclosure, control is adopted so that the main power source is automatically turned off when either one of two conditions is satisfied, and if the main power source is turned off, a multi-step operation is required in order to cause the cutting blade to rotate once again, and thus an unforeseen situation in which the cutting blade rotates unexpectedly does not occur, and the operator can carry out the removal of mown grass in the vicinity of the cutting blade without any safety problem, and a psychological burden of the operator is also eliminated.

### BRIEF DESCRIPTION OF THE DRAWINGS

Fig. 1 is an external perspective view of an electric work machine with cutting blade according to one embodiment of the present disclosure;
Fig. 2 is a perspective view illustrating the inside of a motor box of the electric work machine with cutting blade illustrated in Fig. 1;
Fig. 3 is a perspective view illustrating the electric work machine with cutting blade illustrated in Fig. 1 when viewed from a handle side;
Fig. 4 is a perspective view illustrating the electric work machine with cutting blade illustrated in Fig. 1 as viewed from the underside;
Fig. 5 is a cross-sectional view illustrating the structure of a clutch arranged inside a housing deck of the electric work machine with cutting blade illustrated in Fig. 1;
Fig. 6 is an enlarged view of the clutch illustrated in Fig. 5, and is a cross-sectional view illustrating a state in which the clutch is disengaged;
Fig. 7 is an enlarged view of the clutch illustrated in Fig. 5, and is a cross-sectional view illustrating a state in which the clutch is engaged;
Fig. 8 is an external perspective view illustrating the vicinity of a clutch lever relating to one embodiment of the present disclosure;
Fig. 9 is a block diagram illustrating control by a controller relating to one embodiment of the present disclosure;
Fig. 10 is an enlarged perspective view of an inclination sensor relating to one embodiment of the present disclosure;
Fig. 11 is a front view of the machine body of the electric work machine with cutting blade relating to one embodiment of the present disclosure; and
Fig. 12 is a flowchart illustrating a process from starting operation until ending operation in the electric work machine with cutting blade relating to one embodiment of the present disclosure.

### DETAILED DESCRIPTION OF THE EMBODIMENTS

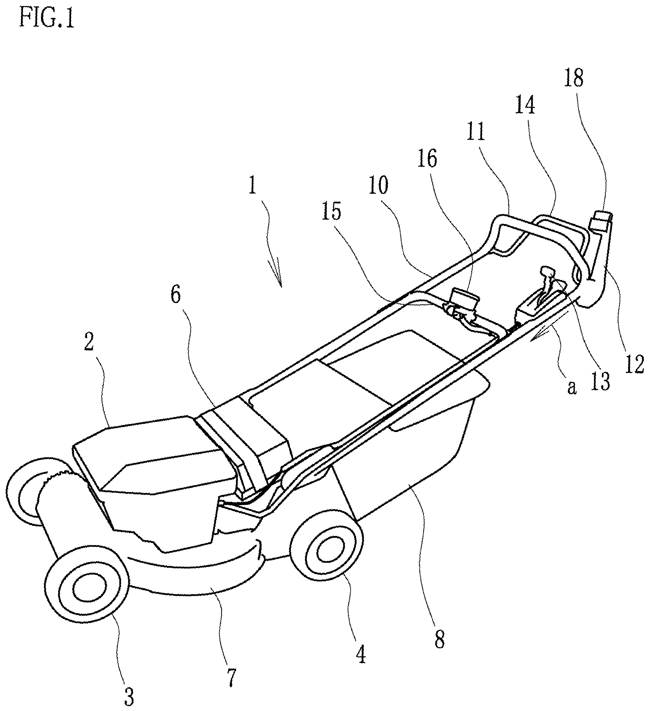

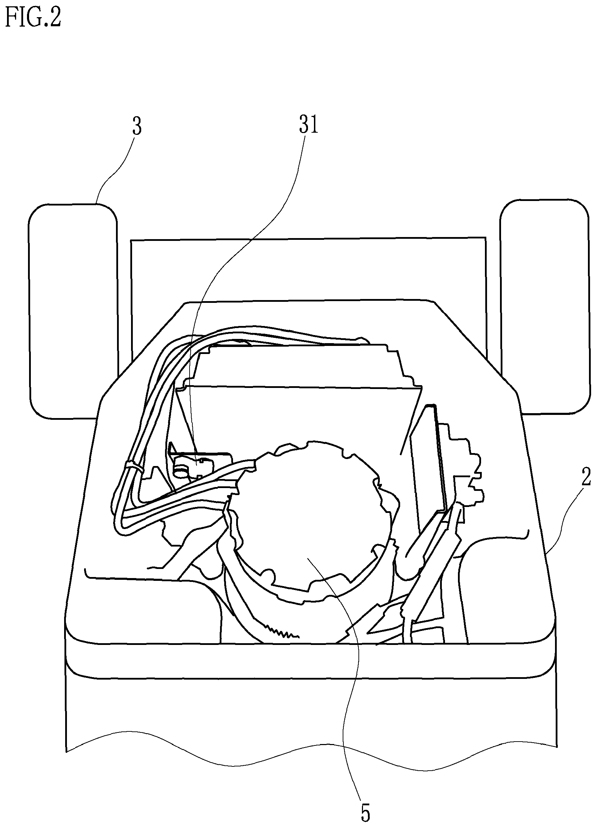

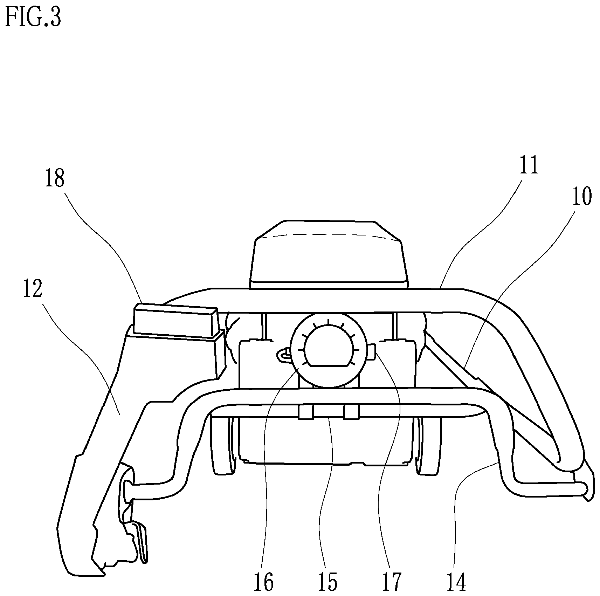

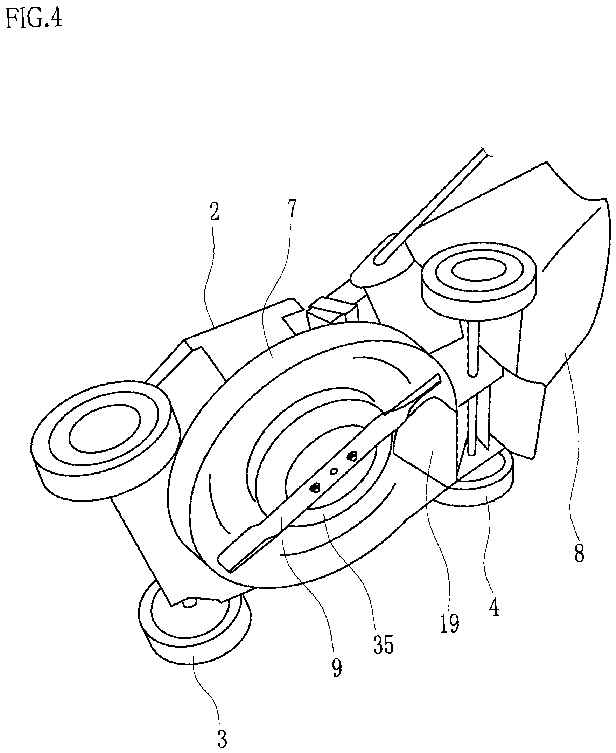

Hereunder, one embodiment of the present disclosure will be described with reference to the drawings. Fig. 1 is an external perspective view of an electric work machine with cutting blade 1 (hereinafter, referred to simply as "work machine 1") relating to one embodiment of the present disclosure. Fig. 2 is a perspective view illustrating the inside of a motor box 2. Fig. 3 is a perspective view of the work machine 1 when viewed from a handle side. Fig. 4 is a perspective view of the work machine 1 as viewed from the underside.

Although in the present embodiment the work machine 1 is described using an example of a walk-behind lawn mower, as will be described later, the present disclosure relates to control for safety measures when removing mown grass in the vicinity of a cutting blade in a work machine in which a clutch is interposed between an electric motor and the cutting blade, it suffices that the object for application of this control has a similar cutting blade rotation mechanism as the work machine 1, and for example the object for application of this control may be a riding lawn mower or a grass cutter.

First, a general outline of the work machine 1 will be described with reference to Figs. 1 to 4. In Fig. 1, front wheels 3 are attached to the front of the motor box 2, and rear wheels 4 are attached to the rear. As illustrated in Fig. 2, an electric motor 5 is mounted inside the motor box 2. The rear wheels 4 and a cutting blade 9 (see Fig. 4) are rotationally driven by the electric motor 5.

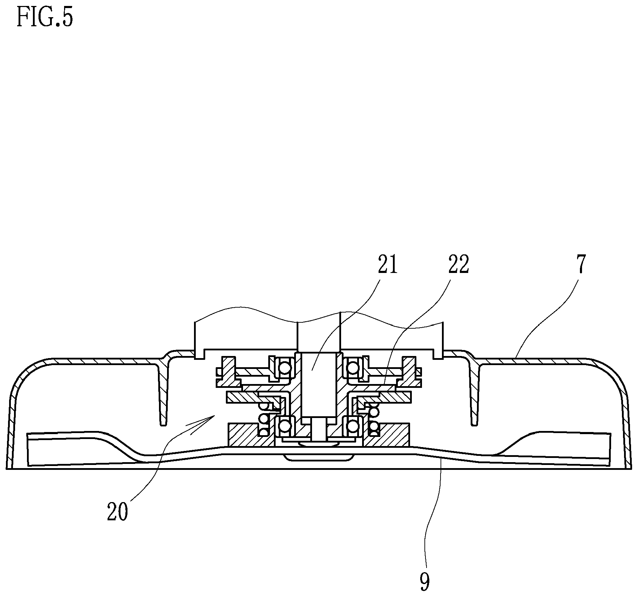

In Fig. 1, a main power source 6 (battery) is mounted at the rear of the motor box 2. A housing deck 7 is provided below the motor box 2, and a grass bag 8 is attached to the rear of the housing deck 7. As illustrated in Fig. 4, the cutting blade 9 is arranged inside the housing deck 7. As will be described in detail later, rotation of the electric motor 5 is transmitted to the cutting blade 9 via a clutch 20 (see Fig. 5), whereby the cutting blade 9 rotates.

In Fig. 4, a disk with fins 35 rotates integrally with the rotation of the cutting blade 9, and a flow of air is generated from the housing deck 7 to the grass bag 8. As a result, grass that was cut by the rotation of the cutting blade 9 is sent to the grass bag 8 through an outlet 19, and thereby collected in the grass bag 8.

The work machine 1 is a machine that is used by an operator while walking. In Fig. 1, operating rods 10 are attached to the machine body, and an operation handle 11, a clutch lever 12 (operation means for the clutch), and a shift lever 13 are attached to an end of the operating rods 10. Further, a frame 15 is arranged so as to extend between the pair of operating rods 10, and a display 16 that displays the rotation speed or the like of the electric motor 5 is fixed to the frame 15. As illustrated in Fig. 3, a main switch 17 is attached to the display 16, and the main power source 6 can be turned on by rotating the main switch 17.

In Fig. 1, in a state in which the main power source 6 has been turned on, the electric motor 5 can be started by sliding the shift lever 13 (in the arrow "a" direction), and the speed of rotation of the electric motor 5 can be gradually increased. An operation lever 14 is attached in the vicinity of the operation handle 11, and by operation of the operation lever 14 in a state in which the electric motor 5 is rotating, the rear wheels 4 are driven and the work machine 1 moves forward.

Even if the electric motor 5 is rotating, rotational driving of the cutting blade 9 is stopped unless the clutch lever 12 is operated, and when lawn mowing is to be performed, it is necessary to operate the clutch 20 (see Fig. 5) using the clutch lever 12 to switch from a state in which the clutch 20 is disengaged in which motive power of the electric motor 5 is not transmitted to the cutting blade 9 to a state in which the clutch 20 is engaged in which motive power of the electric motor 5 is transmitted to the cutting blade 9.

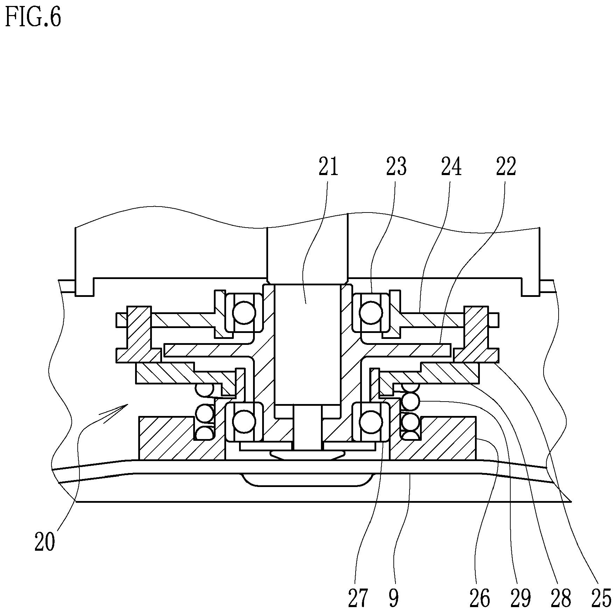

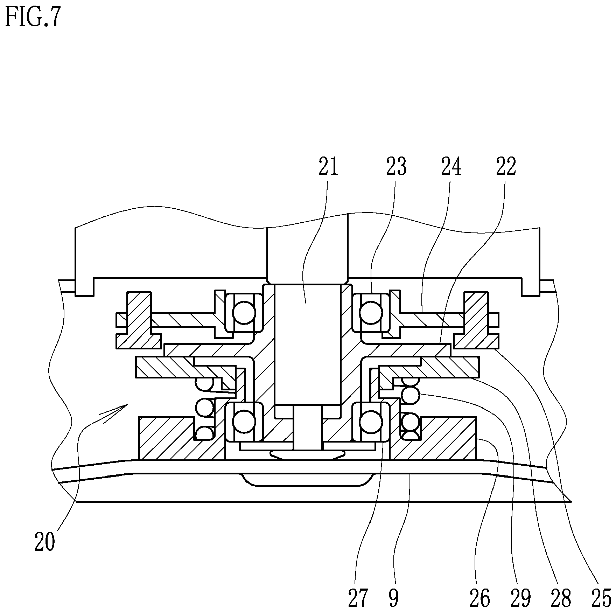

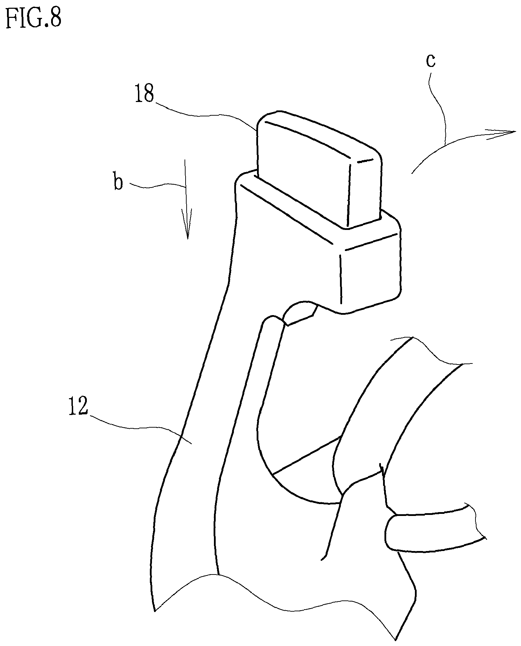

Hereunder, operation of the clutch 20 will be described while referring to Fig. 5 to Fig. 8. Fig. 5 is a cross-sectional view illustrating the structure of the clutch 20 that is arranged inside the housing deck 7. Fig. 6 and Fig. 7 are enlarged views of the clutch 20. Fig. 6 illustrates a state in which the clutch 20 is disengaged, and Fig. 7 illustrates a state in which the clutch 20 is engaged. Fig. 8 is an external perspective view illustrating the vicinity of the clutch lever 12.

As illustrated in Fig. 5, the clutch 20 is arranged inside the housing deck 7, and a motor shaft 21 of the electric motor 5 (see Fig. 2) that is arranged on the upper side of the housing deck 7 is connected to a drive disk 22. The motor shaft 21 and the drive disk 22 are connected by a key (not illustrated), and the drive disk 22 rotates integrally with the rotation of the motor shaft 21.

In Fig. 6, a brake disc support plate 24 is attached to the motor shaft 21 via an upper-side bearing 23. An annular brake disc 25 is attached to the brake disc support plate 24 so as to be movable in the vertical direction. In this configuration, even if the motor shaft 21 rotates, because the upper-side bearing 23 is interposed between the motor shaft 21 and the brake disc support plate 24, the brake disc support plate 24 and the brake disc 25 that is integrated with the brake disc support plate 24 do not rotate.

The cutting blade 9 is fixed to the lower side of a blade holder 26, and a lower-side bearing 27 is interposed between the blade holder 26 and the drive disk 22. A friction plate 28 is connected to the upper side of the blade holder 26 in a turn-stopping fashion so as to be vertically slidable, and when the friction plate 28 rotates, the blade holder 26 and the cutting blade 9 rotate integrally with the friction plate 28.

A spring 29 is interposed between the blade holder 26 and the friction plate 28, and the friction plate 28 slides in the vertical direction as the spring 29 expands and contracts. In the state illustrated in Fig. 6, the friction plate 28 is pressed by the brake disc 25 and caused to slide downward, and the spring 29 is contracted. Therefore, the friction plate 28 is separated from the drive disk 22. This state is a state in which the clutch 20 is disengaged, and even if the drive disk 22 rotates integrally with rotation of the motor shaft 21, the rotation of the drive disk 22 is not transmitted to the friction plate 28, and the cutting blade 9 does not rotate either.

In contrast, the state illustrated in Fig. 7 is a state in which the pressing of the friction plate 28 by the brake disc 25 has been released, and as a result the spring 29 extends and the friction plate 28 presses the drive disc 22 due to the repulsive force of the spring 29. This state is a state in which the clutch 20 is engaged, and thus rotation of the drive disk 22 is transmitted to the friction plate 28, and the cutting blade 9 rotates to enable lawn mowing.

The work machine 1 includes a switching mechanism (not illustrated) that switches between a state in which the brake disc 25 is pushed down to the lower side to disengage the clutch 20 (state in Fig. 6), and a state in which the disengaged state of the clutch 20 has been released and the clutch 20 is engaged (state in Fig. 7). This switching mechanism is operated by operating the clutch lever 12 (see Fig. 1 and Fig. 8).

In Fig. 8, in a state in which an operation button 18 at the upper portion of the clutch lever 12 is pressed (arrow b direction), when the clutch lever 12 is tilted forward (arrow c direction) in that state, the switching mechanism is activated and the state in which the brake disc 25 is pushed down to the lower side is released, the friction plate 28 presses the drive disk 22 as illustrated in Fig. 7, and the clutch 20 enters an engaged state and the cutting blade 9 rotates. The cutting blade 9 rotates as long as the state in which the operation button 18 is pressed and the clutch lever 12 is tilted to the front side is maintained, but when the operator's hand separates from the clutch lever 12, the clutch 20 enters a disengaged state and rotation of the cutting blade 9 stops.

A general outline of the work machine 1 and the operation of the clutch have been described above, and as illustrated in Fig. 4, during mowing work, mown grass becomes clogged inside the housing deck 7 or in the outlet 19 and mown grass becomes entangled with the cutting blade 9. If this state progresses, the electric motor 5 enters an overloaded state, and the electric motor 5 stops and rotation of the cutting blade 9 also stops. In this case, in order to continue the original mowing work, it is necessary to place the working machine 1 on its side and remove the mown grass in the vicinity of the cutting blade 9.

As illustrated in Fig. 1, in the work machine 1, the clutch lever 12 and the housing deck 7 are located at positions that are separated from each other, and the positional relationship between the clutch lever 12 and the cutting blade 9 is a positional relationship such that while an operator maintains a state in which the clutch 20 is engaged by means of the clutch lever 12, the same operator cannot remove mown grass from the vicinity of the cutting blade 9, and is designed so that gripping of the clutch lever 12 and removal of mown grass are operations that the operator cannot perform at the same time.

Therefore, in the case of performing an operation to place the work machine 1 on its side and remove mown grass in the vicinity of the cutting blade 9, it is necessary for the operator to release their hand from the clutch lever 12. Upon the operator releasing their hand from the clutch lever 12, as described above, the clutch 20 enters a disengaged state, and motive power of the electric motor 5 is not transmitted to the cutting blade 9 and the rotation of the cutting blade 9 stops.

Accordingly, removal of mown grass in the vicinity of the cutting blade 9 can be performed in a state in which motive power of the electric motor 5 is not transmitted to the cutting blade 9. In the present embodiment, since gripping of the clutch 20 and removal of mown grass are operations that the operator cannot perform at the same time, in order to engage the clutch 20 once again it is necessary for the operator to move their hands away from the vicinity of the cutting blade 9, and thereafter operate the clutch lever 12, and it is thus difficult to imagine the occurrence of a dangerous situation in which the cutting blade 9 rotates unexpectedly.

On the other hand, when the clutch 20 is in a disengaged state, because the electric motor 5 rotates even when rotation of the cutting blade 9 is stopped, work to remove mown grass in this state places a psychological burden on the operator. In addition, in order to ensure complete safety measures, it is necessary to also take into consideration the occurrence of an unexpected situation in which the cutting blade 9 rotates due to non-standard use during work to remove mown grass. In view of these points, in order to further strengthen the safety measures at the time of carrying out work to remove mown grass, the inventors of the present application derived control that, when a predetermined condition is satisfied, does not merely stop energization of the electric motor 5, but rather automatically turns off the main power source.

The work machine 1 has a built-in controller 30 (a computer) for controlling power on and off of the main power source 6. The control performed by the controller 30 is described hereunder while referring to, in particular,

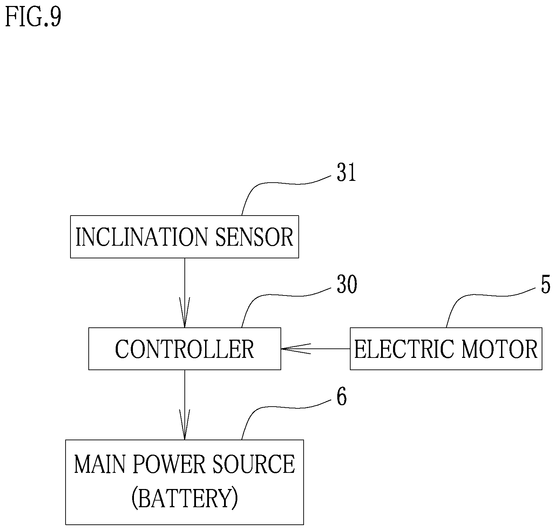

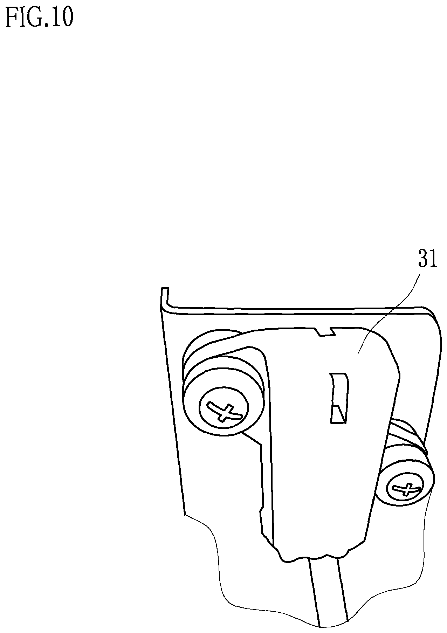

Fig. 9 to Fig. 12. Fig. 9 is a block diagram illustrating control performed by the controller 30, Fig. 10 is an enlarged perspective view of an inclination sensor 31, and

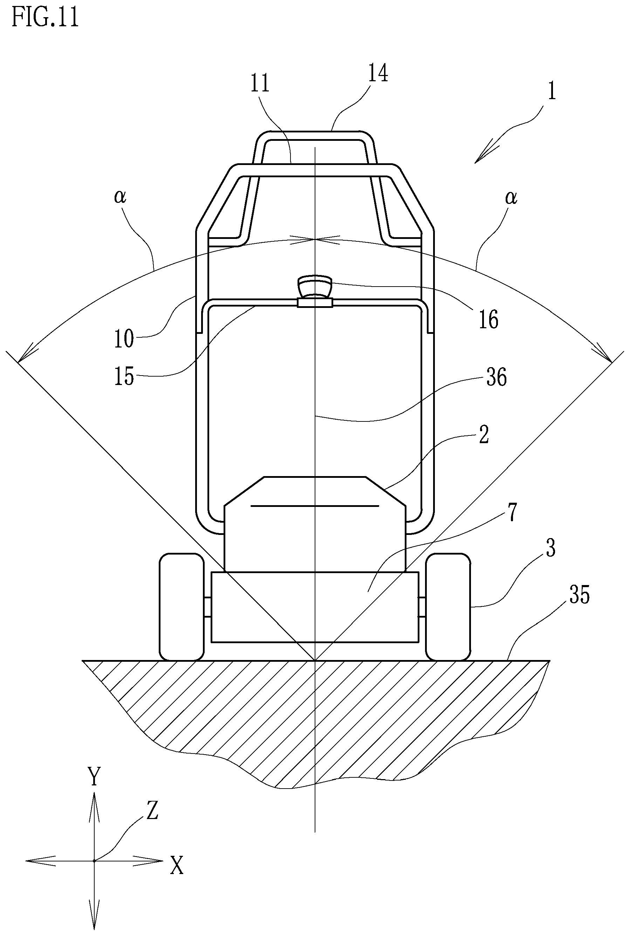

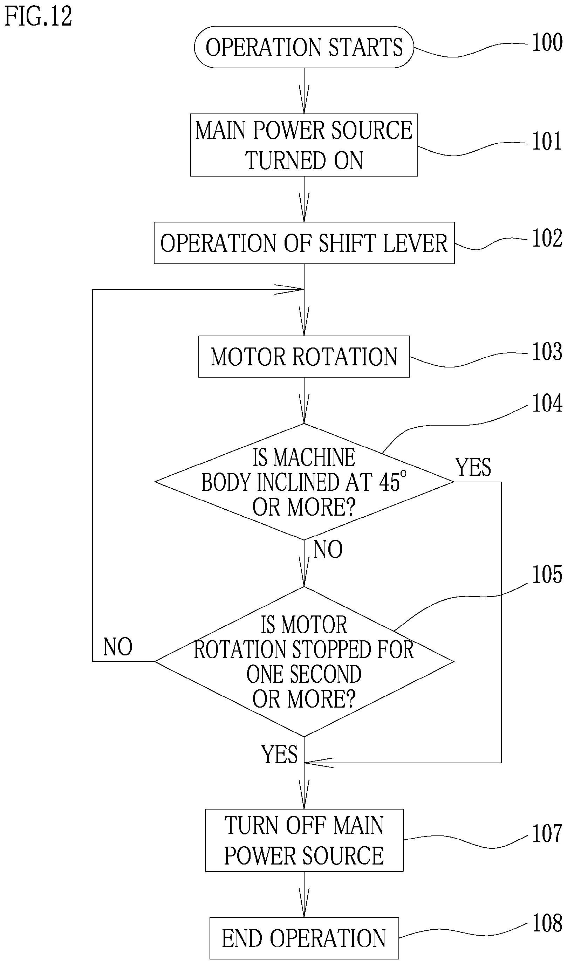

Fig. 11 is a front view of the work machine 1, and Fig. 12 is a flowchart illustrating a process from starting operation until ending operation.

In Fig. 9, a signal from the inclination sensor 31 is input to the controller 30. As illustrated in Fig. 2, the inclination sensor 31 is fixed inside the motor box 2. The inclination sensor 31 is a sensor that detects an inclination angle, and when attached to an object, a signal proportional to the inclined angle of the object is output. In the present embodiment, the inclination sensor 31 detects the inclination angle in the horizontal direction that is orthogonal to the traveling direction of the machine body.

The inclination angle will now be described specifically while referring to Fig. 11. In Fig. 11 that is a front view of the machine body of the work machine 1, the work machine 1 is on a horizontal plane 35, and a direction in which the X-direction is orthogonal to the traveling direction (Z-direction) of the machine body of the work machine 1 is the horizontal direction. A reference line 36 is the center line of the machine body that extends in a direction perpendicular to the horizontal plane 35 (Y-direction). In FIG. 11, when the machine body of the work machine 1 inclines by the amount of an angle α in the horizontal direction (X-direction), the reference line 36 also inclines by the amount of the angle α. The inclination sensor 31 is capable of detecting this angle α.

The control according to the present embodiment is control such that the main power source 6 is automatically turned off when either one of a first condition and a second condition is satisfied. The first condition is that the angle α in the horizontal direction is a prescribed angle or more. The first condition is a condition that takes into account the fact that the machine body is placed on its side in order to remove mown grass in the vicinity of the cutting blade 9.

The second condition is that rotation of the electric motor 5 stops for a prescribed time period or more. The second condition is a condition that takes into account the fact that when clogged and entangled mown grass builds up and rotation of the cutting blade 9 stops due to the resistance of the clogged and entangled mown grass, rotation of the electric motor 5 also stops at the same time as rotation of the cutting blade 9 stops.

Hereunder, with reference to Fig. 12, the control for safety measures according to the present embodiment is described while describing operations from the start of operation of the work machine 1 to the end of operation thereof. In Fig. 12, when starting operation (step 100), the main power source 6 is turned on (step 101) by rotating the main switch 17 (see Fig. 3). By sliding the shift lever 13 (see Fig. 1) in this state (step 102), the electric motor 5 is started and the electric motor 5 rotates (step 103). In this state, in Fig. 1, by operating the operation lever 14, the rear wheels 4 are driven and the work machine 1 moves forward.

On the other hand, as long as the clutch lever 12 (see Fig. 1) is not operated, even if the electric motor 5 is rotating, the clutch 20 is in a disengaged state and the cutting blade 9 does not rotate, and in order to cause the cutting blade 9 to rotate it is necessary to release the state in which the clutch 20 is disengaged by operating the clutch lever 12 to engage the clutch 20. In the present embodiment, regardless of whether the state is a state in which the clutch 20 is disengaged or is a state in which the clutch 20 is engaged, if the machine body inclines by 45 degrees or more (step 104), in Fig. 9, the controller 30 detects the fact that the machine body is inclining by 45 degrees or more by means of the signal from the inclination sensor 31, and the main power source 6 is turned off (step 107) and operation of the work machine 1 ends (step 108).

When the main power source 6 is turned off, rotation of the electric motor 5 also stops, and not only rotation of the cutting blade 9. In order to cause the cutting blade 9 to rotate, it is necessary to perform a multi-step operation which includes raising the machine body, rotating the main switch 17 illustrated in Fig. 3 to turn on the main power source 6 once more, and sliding the shift lever 13 (see Fig. 1) to start the electric motor 5, and thereafter tilting the clutch lever 12 forward in a state in which the operation button 18 at the upper portion of the clutch lever 12 is pressed as illustrated in Fig. 8. Therefore, if the state is one in which the machine body has been placed on its side and the main power source 6 is turned off, an unforeseen situation in which the cutting blade 9 rotates unexpectedly does not occur, and the operator can remove mown grass in the vicinity of the cutting blade 9 without any safety problem.

The inclination of the machine body is as described above with reference to Fig. 11, and 45 degrees is the angle α in Fig. 11. The angle of 45 degrees is one example of the prescribed angle, and the prescribed angle is not limited thereto, and it suffices to appropriately determine the prescribed angle in consideration of the size, structure, usage mode, and the like of the machine body.

As described above, the second condition whereby the main power source 6 is automatically turned off is that rotation of the electric motor 5 stopped for a prescribed time period or more. When the amount of clogged or entangled mown grass builds up inside the housing deck 7 (see Fig. 4) during the mowing operation, rotation of the cutting blade 9 stops. Since the clutch 20 is engaged during the mowing operation, rotation of the electric motor 5 also stops at the same time that the rotation of the cutting blade 9 stops. In the present embodiment, upon this stoppage of rotation of the electric motor 5 continuing for one second or more (step 105), the main power source 6 is turned off (step 107) and operation of the work machine 1 ends (step 108).

When the main power source 6 has been turned off, as described above, it is necessary to perform a multi-step operation to cause the cutting blade 9 to rotate again, and an unforeseen situation in which the cutting blade 9 rotates unexpectedly does not occur, and the operator can remove mown grass in the vicinity of the cutting blade 9 or perform work to inspect various parts without any safety problem. Further, if a state in which rotation of the electric motor 5 has stopped continues in a state in which the clutch 20 is engaged, an overloaded state of the electric motor 5 will continue, however because the main power source 6 is quickly turned off, the overloaded state is released and an extreme increase in electric power consumption can be prevented.

On the other hand, in a case where the clutch 20 is disengaged immediately after rotation of the electric motor 5 stopped, although the electric motor 5 rotates, when the machine body is tilted over in order to remove mown grass as described above, the main power source 6 is turned off (step 107) and operation of the work machine 1 ends (step 108).

Although the prescribed value of the stop time of the electric motor 5 when the main power source is turned off is one second in the present embodiment, the prescribed value is not limited to this value and may be appropriately determined. Whilst there are also cases where operation of the electric motor 5 stops momentarily but is immediately restored, and a certain amount of waiting time is therefore necessary, in order to avoid the occurrence of a situation in which an overloaded state continues for a long time as described above, a short value of about several seconds is desirable as the prescribed value of the stop time.

The present disclosure has been described above, and according to the present disclosure, in consideration of circumstances that are assumed for a case of removing mown grass in the vicinity of the cutting blade 9, control such that the main power source 6 is automatically turned off at a time when either one of a first condition and a second condition is satisfied is adopted, and if the main power source 6 is turned off, a multi-step operation is required in order to cause the cutting blade 9 to rotate once again, and thus an unforeseen situation in which the cutting blade 9 rotates unexpectedly does not occur, and the operator can carry out the work to remove mown grass in the vicinity of the cutting blade 9 without any safety problem, and a psychological burden of the operator is also eliminated.

The above embodiment is one example, and may be appropriately modified. For example, although in the above embodiment the clutch lever 12 is used as operation means for operating the clutch 20, as long as the clutch 20 can be operated, the operation means is not limited to a lever structure. Further, with respect to the first condition, although the angle α that is detected is taken as being an inclination angle with respect to the horizontal direction, in order to further increase the safety, control may be added which detects an inclination angle with respect to the travelling direction (front-rear direction) of the machine body and turns off the main power source 6. Reference Signs List

- 1: electric work machine with cutting blade

- 3: front wheel
- 4: rear wheel
- 5: electric motor
- 9: cutting blade
- 12: clutch lever (operation means of clutch)
- 18: operation button
- 20: clutch
- 22: drive disk
- 28: friction plate
- 30: controller
- 31: inclination sensor

## Claims

1. An electric work machine with cutting blade that performs mowing work while causing a machine body to travel, comprising:
a cutting blade;
an electric motor that rotationally drives the cutting blade;
a main power source that supplies electric power to the electric motor;
a clutch that engages and disengages motive power between the electric motor and the cutting blade;
an inclination sensor that detects an inclination of the machine body; and
controller for controlling power on and off of the main power source,
wherein:
when a direction orthogonal to a travelling direction of the machine body is defined as a horizontal direction, and a center line in a vertical direction of the machine body when the machine body on a horizontal plane is viewed from a front side is defined as a reference line,
the controller turns off the main power source when the reference line is inclined at a prescribed angle or more with respect to the horizontal direction or when rotation of the electric motor is stopped for a prescribed time period or more.

2. The electric work machine with cutting blade according to claim 1, wherein:
by means of operation means for operating the clutch, it is possible to switch between a state in which the clutch is disengaged in which motive power of the electric motor is not transmitted to the cutting blade and a state in which the clutch is engaged and motive power of the electric motor is transmitted to the cutting blade, and a positional relationship between the operation means and the cutting blade is a positional relationship such that while an operator maintains a state in which the clutch is engaged by means of the operation means, the same operator as the operator cannot remove mown grass that is in a vicinity of the cutting blade.
